# EUROPEAN PATENT APPLICATION

(11) **EP 1 762 937 A1**
(43) Date of publication of application: **14.03.2007**
(21) Application number: 05753234.3
(22) Date of filing: 23.06.2005
(51) Int. Cl.: G06F 9/50, H04M 1/00

(54) **LINKAGE OPERATION METHOD AND MOBILE COMMUNICATION TERMINAL**

(30) Priority: 30.06.2004 JP 2004192831
(71) Applicant: Vodafone K.K., Tokyo 105-6205 (JP)
(72) Inventor: KUWABARA, Masahiko, 1056205 (JP); AOKI, Kazuo, 1056205 (JP); MATSUMURA, Toshiro, 1056205 (JP)
(74) Representative: Grünecker, Kinkeldey, Stockmair & Schwanhäusser Anwaltssozietät
(86) International application number: PCT/JP2005/011535
(87) International publication number: WO 2006/003835

(57) **Abstract**

In a structure comprising host section performs a processing associated with a communication with an outside, and an engine section executes a predetermined function under a management of the host section, a mobile communication terminal is built compactly, performing a convenient key input data processing for a user.
When key input data is notified to a host section 30 from an operating section 21 by the user, the host section judges whether or not the key input data is input by operating a host-specific key is made. If the result is affirmative, the host section 30 judges whether or not the engine section 40 is in an engine mode to be notified of the key input data, estimating the engine mode is continued. Further, if the result is affirmative, the host section 30 notifies the key input data of the engine section 40.

## Description

### Technical Field

The present invention relates to a coordination method and a mobile communication terminal, and more particularly to a coordination method which is a method of operating by coordination between a host section which performs a processing associated with a communication with an outside, and an engine section which executes a predetermined function under a management of the host section, in the mobile communication terminal, and a mobile communication terminal which uses the coordination method.

### Background Art

Mobile communication terminals such as a cellular phone have been hitherto used widely. There has been a remarkable development in the mobile communication terminals, particularly in a technology related to the cellular phone. Optional functions for enjoying games and listening to music, in addition to a communication function via a mobile communication network which is an essential function as the mobile communication terminal have also been installed.

In such mobile communication terminal, a processor which performs various data processing for carrying out the essential functions and the optional functions, is built-in. Resources such as a storage section which includes a storage element for storing various computer programs and data, a wireless communication section for performing a wireless communication, an operating section for making operation commands by a user, and a notifying section (a display section and an audio output section) for notifying various information to the user are connected to this processor. Moreover, the processor executes a computer program stored in the storage section, and by controlling appropriately the resources connected according to the requirement, the essential functions and the optional function are carried out.

### Disclosure of Invention

### Problems to be solved by the Invention

As it has been mentioned above, in a conventional mobile communication terminal, since it is necessary to carry out various functions, an ordinary built-in processor is adopted. This is an excellent method from a point of view of letting the mobile communication terminal to have a simple structure, and to reduce a size and an electric power consumption of the mobile communication terminal. However, when a general processor is used, even if an attempt is made to improve a performance of an operation of an optional function for enjoying the games and listening to music for example, it is difficult to have a significant improvement in the performance.

Incidentally, when a comparison is made with other information processing apparatuses, it can be said that the improvement in performance of the mobile communication terminal is sought for the operation of optional functions. The concrete examples of the operation of the optional function which is sought to be improved are execution of games and reproducing music etc. However, in a case of operation of the optional function, particularly a screen display process and an audio data output process exert substantial load on the processor.

Moreover, although the essential functions and the optional functions mentioned above are sought to be carried out in the mobile communication terminal, the user being a single person as a general rule, the essential functions and the optional functions are not sought to be operated independently at the same time, whatever may be the case. For example, when the operation of conversation which is an operation of the essential function is being carried out, an operation of a game which is an operation of the optional function is not sought to be carried out.

Due to the abovementioned reasons, causing an engine section which includes an engine processor to execute an application dealing with the operation of the optional functions, under a management of a host section which includes a host processor which performs a communication operation, upon introducing an engine processor specifically for the optional functions which is able to perform the image display processing and the audio-data output processing in excellent manner, can be taken into consideration. When such structure including the host section and the engine section is adopted, a device is connected to the host processor of the host section, and also a device is connected to the engine processor of the engine section.

At this time, a structure in which all devices used in association with the operation of the essential function such as the communication operation are connected to the host processor, and all devices used in association with the operation of the essential function such as the application operation are connected to the engine processor can be considered. However, when the device used in association with the operation of the essential function and the device used in association with the operation of the optional function are compared, it can be noticed that many of such devices have common functions.

For example, a key input device which is essential for realizing the communication function which is a basic function, is a device which is required generally even for executing an application such as a game application which is an optional function. In this case, when types of keys which are normally provided in the key input device for realizing the communication function which is a basic function and types of keys which are considered to be essential for executing a game application etc., which is an optional function are compared; the latter, the type of keys which are considered to be essential for realizing a game application etc., is a part of the former, a type of keys which are normally provided in the key input device for realizing the communication function. For example, a signal transmitting key and a call-ending key are convenient for realizing the communication function, but are not used while executing the game application. Moreover, an operation of a key for putting a power supply ON and OFF is to be detected in the host section, and not in the engine section. Therefore, for structuring compactly the entire mobile communication terminal, when a structure is let to be such that a doubling of a device to be connected to the host processor and a device to be connected to the engine processor is avoided, it is rationalistic to connect the key input device to the host section.

When such structure is adopted, at the time of executing an application in the engine section, the application is required to acquire from a key input device via the host section, necessary key input data such as an arrow-key input data for each type of operation in a game application, and key data for character input for inputting a name of a hero. Therefore, the host section and the engine section are required to operate in coordination. However, as of today, no concrete technology has been proposed for the coordination of the host section which carries out the function of communication with the outside, and the engine section which executes the application, in this case.

The present invention is made in view of the abovementioned circumstances, and it is an object of the present invention to provide a coordination method which enables to build compactly an entire mobile communication terminal, and to perform a key input data processing which is highly convenient for the user, in a structure which includes a host section which has a host processor, and performs a processing associated with a communication with an outside, and an engine section which has an engine processor, and executes a predetermined function under a management of the host section.

Moreover, it is an object of the present invention to provide a mobile communication terminal which can be built compactly, comprising: a host section which performs a processing associated with a communication with an outside; and an engine section which executes the predetermined function under the management of the host section, and which enables to perform a key input data processing which is highly convenient for a user.

### Means for Solving Problem

According to a first aspect of the present invention, a coordination method of the present invention is a method of operating by coordination between a host section which performs a processing associated with a communication with an outside, and an engine section which executes a predetermined function under a management of the host section, in a mobile communication terminal, comprising steps of; judging operation key at which the host section makes a judgment of whether or not key input data from a key operating section which is connected to a host processor of the host section is by a key other than a predetermined key in the key operating section; judging operation mode at which, when a judgment result at the step of judging operation key is affirmative, the host section makes a judgment of whether or not an engine processor of the engine section is in an engine-mode state of controlling actively an operation of at least one engine connecting device which is connected to the engine processor of the engine section, and the engine-mode state is estimated to be continued, and; notifying key input data at which, when a judgment result at the step of judging operation mode is affirmative, the host section notifies the key input data to the engine section.

In this coordination method, when the key input data is notified to the host section from the key operating section by a key operation by the user, at the step of judging operation key, the host section makes a judgment of whether or not the key input data is input by an operation of a key other than the predetermined key in the key operating section. For example, each type of a host-specific key which is to be used only by the host section can be let to be such predetermined key. Each of individual keys is not required to be necessarily provided as such type of host-specific key, and for a certain key, a case in which the key is pressed for a time exceeding the predetermined time and a case in which the key is pressed for a time not exceeding the predetermined time can be let to be two different cases.

When the judgment result at the step of judging operation key is affirmative, at the step of judging operation mode, the host section makes a judgment of whether or not the engine processor of the engine section is in the engine-mode state of controlling actively the operation of at least one engine connecting device which is connected to the engine processor of the engine section, and the engine-mode state is estimated to be continued. In this case, the judgment of whether or not the engine-mode state is estimated to be continued is made by making a judgment of whether or not the host section is making an attempt to stop or stop temporarily an execution of an application of the engine section, when there has arisen a need for performing a process associated with an occurrence of an event such as receiving a call having a priority over the process of executing the application. In other words, at the step of judging operation mode, a judgment of whether or not it is estimated that the engine section has issued correctly a request for using a specific host connecting device, as well as the host section is in a state of being able to receive the request for using the specific host connecting device, is made in the host section.

Moreover, when the judgment result at the step of judging operation mode is affirmative, at the step of notifying key input data, the host section notifies the key input data to the engine section. Thus, the key input data from the key operating section which is connected to the host section by the key operation of the user is notified appropriately to the engine section which is in the process of executing the application.

Consequently, according to the coordination method of the present invention, in a structure including the host section which includes the host processor, and performs the processing associated with the communication with the outside, and the engine section including the engine processor, and executes the predetermined function under the management of the host section, it is possible to built compactly the mobile communication terminal, and to perform the key input data processing which is highly convenient for the user.

In the coordination method of the present invention, the predetermined key can be let to be a key for inputting key input data which is processed only by the host section. In this case, entire key input data excluding key input data which cannot be dealt with in the engine section is notified to the engine section. As a result of this, it is possible to maximize the key input data which can be used in the application executed in the engine section, and to execute various applications in the engine section. Moreover, a power supply key which gives a command for putting the power supply of the mobile communication terminal ON and OFF, a key which gives an initialization command to the mobile communication terminal, and a key which gives a command to stop (including a temporary stop) the operation of the engine section, can be let to be the predetermined key.

Moreover, the coordination method of the present invention can further comprise a step of processing predetermined key input data at which, when the judgment at the step of judging operation key is negative, the host section performs processing corresponding to the key input data. In this case, for the key input data associated with an operation of the predetermined key, at the step of processing predetermined key input data, the host section performs the processing corresponding to the key input data. Therefore, the key input data which is input by the operation of the predetermined key by the user can be processed appropriately.

Moreover, the coordination method of the present invention can further comprise a step of processing normal key input data at which, when the judgment result at the step of judging operation mode is negative, the host section performs uniquely, a process corresponding to the key input data. In this case, for key input data which is not associated with an operation of a key other than the predetermined key (in other words, a normal key), which has occurred when the key input data is not to be notified to the engine section, at the step of processing normal key input data, the host section performs a unique processing corresponding to the key input data. Therefore, even when the judgment result at the step of judging operation mode is negative, it is possible to process appropriately the key input data by the operation of the key other than the predetermined key, by the user.

According to a second aspect of the present invention, a mobile communication terminal of the present invention comprises : a host section which comprises a host processor, and performs a processing associated with a communication with an outside: a key operating section which is connected to the host processor, and comprises a plurality of keys for input; and an engine section which comprises an engine processor, and performs a predetermined function under a management of the host section.
The host section comprises: a key operating section which is connected to the host processor, and comprises a plurality of keys for input; an operation key judging means which makes a judgment of whether or not key input data from the key operating section is input by an operation of a key other than a predetermined key in the key operating section; an operation mode judging means which when a judgment result by the operation key judging means is affirmative, makes a judgment of whether or not an engine processor of the engine section is in an engine-mode state of controlling actively an operation of at least one engine connecting device which is connected to the engine processor of the engine section, and the engine-mode state is estimated to be continued; and a key input data notifying means which, when a judgment result by the operation mode judging means is affirmative, notifies the key input data to the engine section.
The engine section comprises: at least one engine connecting device which is connected to the engine processor; and a key input data receiving means which receives key input data which is notified from the host section.

In this mobile communication terminal, when the key input data is notified to the host section from the key operating section, by the key operation of the user, the operation key judging means makes the judgment of whether or not the key input data is input by the operation of the key other than the predetermined key in the key operating section. When the result of this judgment is affirmative, the operation mode judging means of the host section makes a judgment of whether or not the engine processor of the engine section is in the engine-mode state of controlling actively the operation of at least one engine connecting device which is connected to the engine processor of the engine section, and the engine-mode state is estimated to be continued.

When the judgment result by the operation mode judging means is affirmative, the key input data notifying means of the host section notifies the key input data to the engine section. In the engine section to which the key input data is notified in such manner, a key input data receiving means receives the key input data. The key input data from the key operating section connected to the host section by the key operation by the user is notified appropriately to the engine section which is in the process of executing the application.

Consequently, according to the mobile communication terminal of the present invention, it is possible to build compactly the entire mobile communication terminal comprising the host section which performs the processing associated with the communication with the outside, and the engine section which executes the predetermined function under the management of the host section, and to perform the key input data processing which is highly convenient for the user.

In the mobile communication terminal according to the present invention, the host section can be structured to further comprise a predetermined key input data processing means which, when the judgment result by the operation key judging means is negative, performs a processing corresponding to the key input data. In this case, for the key input data which is associated with the operation of the predetermined key mentioned above, the predetermined key input data processing means performs the processing corresponding to the key input data. Therefore, it is possible to process appropriately the key input data by the operation of the predetermined key by the user.

Moreover, in the mobile communication terminal of the present invention, the host section can be structured to further comprise a normal key input data processing means which, when the judgment result by the operation mode judging means is negative, performs unique processing in the host section corresponding to the key input data. In this case, for the key input data associated with the operation of the key other than the predetermined key which has occurred when the key input data is not to be notified to the engine section, the normal key input data processing means performs the unique process corresponding to the key input data. Therefore, even when the judgment result by the operation mode judging means is negative, it is possible to process appropriately the key input data by the operation of the key other than the predetermined key, by the user.

Moreover, in the mobile communication terminal of the present invention, the host section can be structured to further comprise a wireless communication section which is connected to the host processor, and performs a wireless communication between a mobile communication network and a base station.

### Effect of the Invention

As it has been described above, according to a coordination method of the present invention, there is shown an effect that it is possible to build compactly an entire mobile communication terminal comprising a host section which includes a host processor, and performs a processing associated with a communication with an outside, and an engine section which includes an engine processor, and executes a predetermined function under a management of the host section, and to perform a key input data processing which is highly convenient for the user.

Moreover, according to a mobile communication terminal of the present invention, there is shown an effect that it is possible to build compactly the entire mobile communication terminal comprising the host section which performs the processing associated with the communication with the outside, and the engine section which executes the predetermined function under the management of the host section, and to perform the key input data processing which is highly convenient for the user.

### Brief Description of Drawings

Fig. 1A is a front-side external view of a cellular phone according to an embodiment of the present invention;
Fig. 1B is a right-side external view of the cellular phone according to the embodiment of the present invention;
Fig. 1C is a rear-side external view of the cellular phone according to the embodiment of the present invention;
Fig. 2 is a block diagram for describing a functional structure of the cellular phone in Fig. 1A to Fig. 1C;
Fig. 3 is a diagram for describing a content of a nonvolatile area in a storage section of a host section in Fig. 2;
Fig. 4 is a diagram for describing a structure of a storage section of an engine section in Fig. 2;
Fig. 5 is a block diagram for describing a structure of an engine processor in Fig. 2;
Fig. 6 is a state transition diagram for describing a transition of state of the engine section in Fig. 2;
Fig. 7 is a sequence diagram for describing a coordination process associated with key input data by the host section and the engine section;
Fig. 8 is a flowchart for describing a key input data process in the host section in Fig. 7; and
Fig. 9 is a sequence diagram for describing a modified embodiment.

### Best Mode for carrying out the Invention

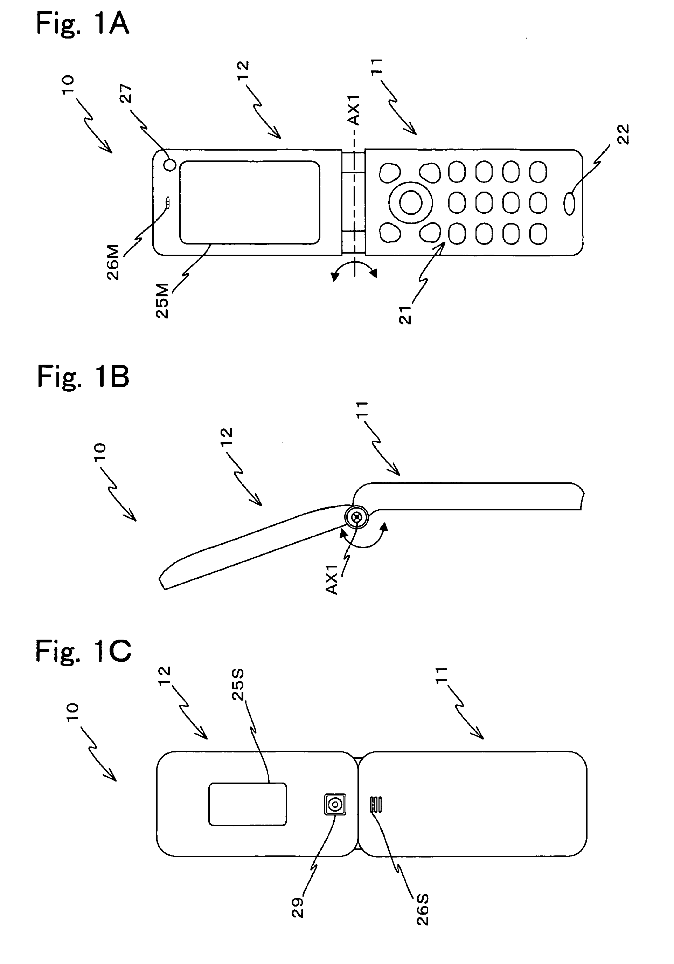

An embodiment of the present invention will be described below while referring to Fig. 1A to Fig. 8.

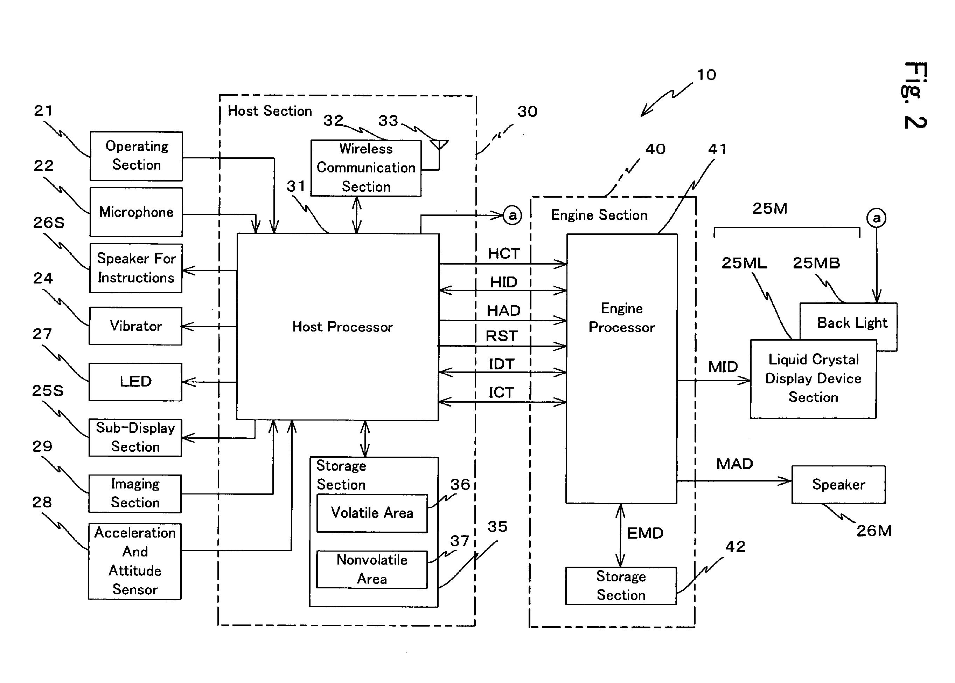

In Fig. 1A to Fig. 1C, and Fig. 2, a structure of a cellular phone 10 which is a mobile communication terminal according to the embodiment is shown schematically. This cellular phone 10 is a so-called clamshell type foldable cellular phone. In this case, a front-side external view of the cellular phone 10 in an unfolded state is shown in Fig. 1A, a right side external view of the cellular phone 10 in the unfolded state is shown in Fig. 1B, and a rear-side external view of the cellular phone 10 in the unfolded state is shown in Fig. 1C. Moreover, in Fig. 2, a functional block structure of the cellular phone 10 is shown.

As shown in Fig. 1A to Fig. 1C, the cellular phone 10 includes a first part 11 and a second part 12 which can be turned with respect to the first part11, with an axis AX1 as a central axis.

As shown in Fig. 1A, (a) an operating section 21 in which operation keys such as a numerical keypad and function keys are arranged, and (b) a microphone 22 for inputting sound during conversation are disposed in the first part 11. Moreover, as shown in Fig. 1C, (c) a speaker for instructions **26S** which generates a sound informing an incoming call and an instruction sound, is disposed on a rear-surface side, when a surface on which the operating section 21 in the first part 11 is disposed is let to be a front face. Here, the function keys in the operating section 21 include host-specific keys such as a key which gives a command for putting a power supply ON and OFF by being pressed for a long time, and in a case of a transition to a call-ending and a standby screen display state during the conversation, and when an application is executed in an engine section 40 which will be described later, gives a command to stop temporarily the application (hereinafter called as "call-ending key").

As shown in Fig. 1A, (a) a main display section 25M which displays operation instructions, an operation situation, a message received, a result of imaging by an imaging section 29 which will be described later, and an image by an application, (b) a speaker 26M which reproduces an aural signal transmitted from a communication counterpart during conversation, and (c) an LED (Light Emitting Diode) 27 for calling attention of a user, are disposed in the second part 12. Moreover, on a rear-surface side when a display surface of the main display section 25M in the second part 12 is let to be a front surface, (d) a sub-display section 25S which performs an auxiliary display, and (e) the imaging section 29 which takes an image in a field of view of an imaging optical system are disposed as shown in Fig. 1C. In this case, the main display section 25M has a liquid crystal display device section 25ML and a back light 25MB as shown in Fig. 2.

Moreover, as shown in Fig. 2, the cellular phone 10 further includes a vibrator 24 for notifying an incoming call to the user by causing the cellular phone 10 to vibrate when a call is received, and an acceleration and attitude sensor 28 for detecting an acceleration acting on the cellular phone 10, and an attitude of the cellular phone 10. The vibrator 24 and the acceleration and attitude sensor 28 are disposed inside the cellular phone 10.

Moreover, the cellular phone 10 includes a host section 30 for carrying out basic functions of a cellular phone such as a communication function, and an engine section 40 which executes an application. The host section 30 and the engine section 40 are disposed inside the cellular phone 10.

The host section 30 includes a host processor 31 which performs an integrated control of the entire cellular phone 10, a wireless communication section 32 for transceiving a communication signal via an antenna 33, and a storage section 35 for storing computer programs and data. In this case, the wireless communication section 32 and the storage section 35 are connected to the host processor 31. Moreover, the operating section 21, the microphone 22, the speaker for instructions 26S, the LED 27, the sub-display section 25S, the vibrator 24, the acceleration and attitude sensor 28, the imaging section 29, and the back light 25MB of the display section 25M which are mentioned above, are connected to the host processor 31.

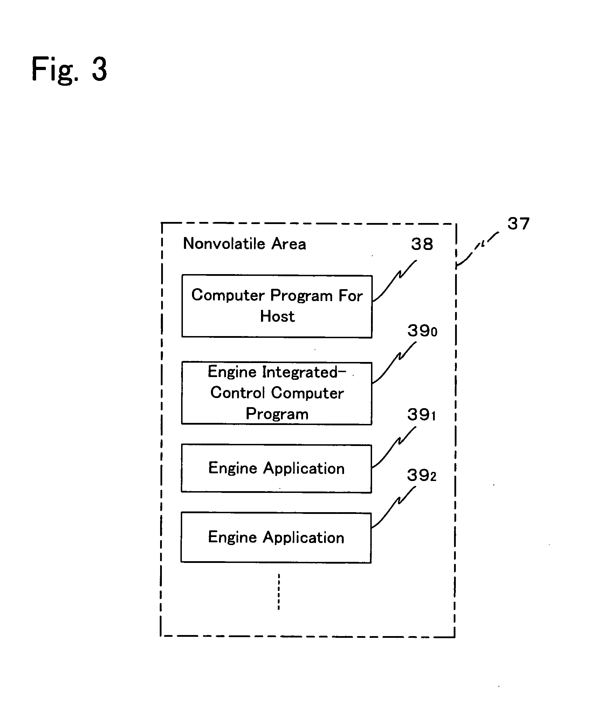

A central processing unit (CPU) function and a digital signal processor (DSP) function are installed in the host processor 31. Moreover, by execution upon reading of a computer program for host 38 which is stored in the storage section 35 (refer to Fig. 3), an operation of a basic function such as an operation of a communication function, processing of key input data from the operating section 21, and an exchange of various data between the host processor 31 and the engine section 40 are performed.

The storage section 35 includes a volatile storage area 36 for storing temporarily various data, and a nonvolatile area 37 for storing permanently computer programs etc. The volatile area 36 includes a volatile storage element, of which a stored content is not guaranteed when an electric power for operation is not supplied. Moreover, the nonvolatile area 37 includes a nonvolatile storage element, of which a stored content is guaranteed even when an electric power for operation is not supplied. In this case, as shown in Fig. 3, in addition to the computer program for host 38, an engine integrated-control computer program 39₀, and engine applications 39₁, 39₂ ...which are executing the engine section 40 are stored in the nonvolatile area 37.

Coming back to Fig. 2, the engine section 40 includes an engine processor 41 which performs an integrated control of the entire engine section 40, and a storage section 42 which stores computer programs and data executed by the engine processor 41. In this case, the storage section 42 is connected to the engine processor 41. Moreover, the speaker 26M and the liquid crystal display device section 25ML of the main display section 25M are connected to the engine processor 41.

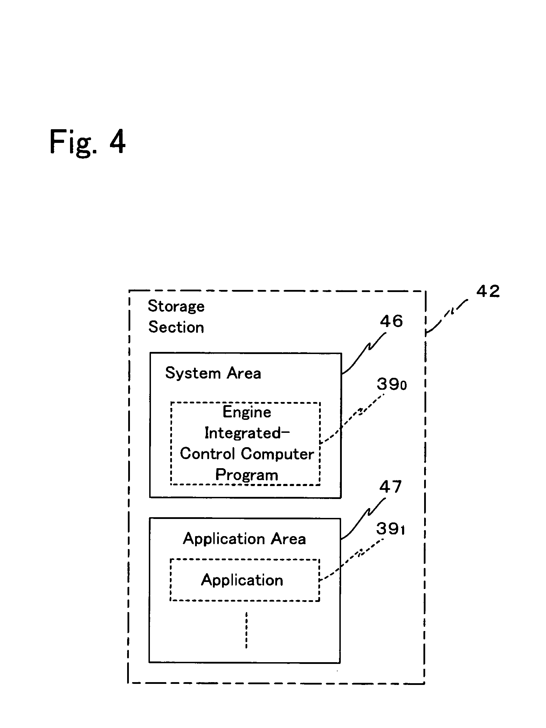

The storage section 42 includes a volatile storage element, of which a stored content is not guaranteed when the electric power for operation is not supplied. In this case, the storage section 42 includes a system area 46 in which the engine integrated-control computer program 39₀ is stored, and an application area 47 in which at least any one of the engine applications 39₁, 39₂ ... is stored, as shown in Fig. 4.

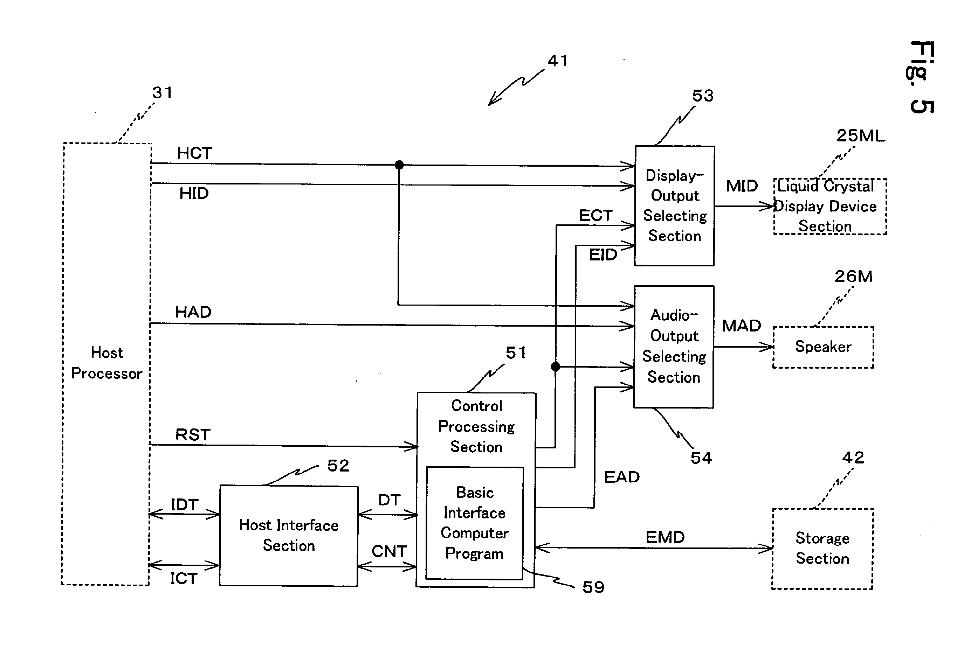

The engine processor 41, as shown in Fig. 5, includes a control processing section 51 and a host interface section 52. Moreover, the engine processor 41 includes a display-output selecting section 53 for selecting one of a host-display image signal HID from the host section 30 and an engine-display image signal EID from the control processing section 51, as a display-image signal MID which is supplied to the liquid crystal display device section 25ML, and supplying the selected signal to the liquid crystal display device section 25ML. Furthermore, the engine processor 41 includes an audio-output selecting section 54 for selecting one of a host audio signal HAD from the host section 30 and an engine audio signal EAD from the control processing section 51, as an audio signal MAD which is supplied to the speaker 26M.

In the control processing section 51, a basic interface computer program 59 for controlling the operation of the engine section 40 including an interface operation between the engine section 40 and the host section 30, at a previous stage of starting execution of the engine integrated-control computer program 39₀ is built-in. Moreover, the control processing section 51 has a three-dimensional graphic processing function and an audio-generation processing function, and at a time of executing any one of the engine applications 39₁, 39₂, ..., exerts the three-dimensional graphic processing function and the audio-generation processing function.

The host interface section 52 is positioned between the host section 30 and the control processing section 51, and acts as an intermediary for various control signals, and a buffering of various commands and various data which are transferred between the host interface section 52 and the host section 30. The host interface section 52 has a two-port RAM (Random Access Memory) element.

In the host interface section 52, one of ports of the two-port RAM element is connected to the control processing section 51 by an internal data signal DT and an internal control signal CNT. In this case, the internal control signal CNT includes signals such as an internal read command signal from the two-port RAM and an internal write command signal to the two-port RAM, issued by the control processing section 51 toward the host interface section 52. Moreover, the internal control signal CNT includes signals such as an internal interrupt signal indicating that data is sent from the host section 30 toward the engine section 40, issued by the host interface section 52 toward the control processing section 51.

Moreover, in the host interface section 52, in the other port of the two-port RAM element, an 8-bit parallel for example, is also connected to the host section 30 by an interface data signal IDT and an interface control signal ICT. In this case, the interface control signal ICT includes signals such as an interface write command signal to the two-port RAM and an interface read command signal from the two-port RAM, issued by the host section 30 toward the host interface section 52. Moreover, the interface control signal ICT includes signals such as an interface interrupt signal indicating that data is sent from the engine section 40 toward the host section 30, issued by the host interface section 52 toward the host section 30.

By performing such exchange of signals, transfer of a command and a response associated with adjunct data according to the requirement is performed between the host section 30 and the engine section 40 via the host interface section 52.

The display-output selecting section 53, in the following manner, selects one of the host display image signal HID and the engine display image signal EID as the display-image signal MID, according to a signal level of a host-output control signal HCT from the host section 30, and an engine-output control signal ECT from the control processing section 51, and outputs the selected signal. In this case, when the signal level of the host-output control signal HCT is a significant level, and when it is specified that the host display image signal HID is to be selected by the host-output control signal HCT, irrespective of the signal level of the engine-output control signal ECT, the display-output selecting section 53 selects the host-display image signal HID, and outputs as the display-image signal MID. On the other hand, when the signal level of the host-output control signal HCT is an insignificant level, the display-output selecting section 53, according to the signal level of the engine-output control signal ECT, selects one of the host-display image signal HID and the engine-display image signal EID, as the display image signal MID.

In other words, in the display-output selecting section 53, when the signal level of the host-output control signal HCT is the insignificant level and the signal level of the engine-output control signal ECT is the significant level, the display-output selecting section 53 selects the engine-display image signal EID, and outputs as the display image signal MID. Moreover, in the display-output selecting section 53, when the signal level of the host-output control signal HCT is the insignificant level and the signal level of the engine-output control signal ECT is the insignificant level, the display-output selecting section 53 selects the host-display image signal HID, and outputs as the display image signal MID.

In the audio-output selecting section 54, similarly as in the display-output selecting section 53 as described above, according to the signal level of the host-output control signal HCT and the engine-output control signal ECT, one of the host audio signal HAD and the engine audio signal EAD is selected as the audio signal MAD, and the selected signal is output. In other words, when the signal level of the host-output control signal HCT is the significant level, irrespective of the signal level of the engine-output control signal ECT, the audio-output selecting section 54 selects the host audio signal HAD, and outputs as the audio signal MAD. Moreover, when the signal level of the host-output control signal HCT is the insignificant level, and the signal level of the engine-output control signal ECT is the significant level, the audio-output selecting section 54 selects the engine audio signal EAD and outputs as the audio signal MAD. Furthermore, when the signal level of the host-output control signal HCT is the insignificant level, and the signal level of the engine-output control signal ECT is the insignificant level, the audio-output selecting section 54 selects the host audio signal HAD, and outputs it as the audio signal MAD.

Next, a transition of a state in the engine section 40 of the cellular phone 10 which is structured as described above will be described.

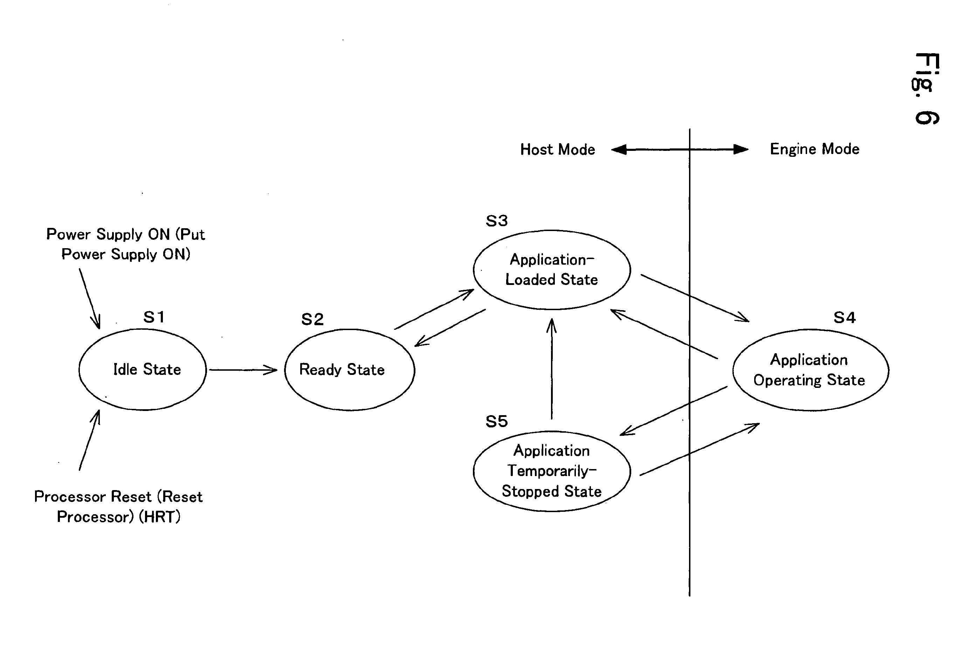

First of all, the transition of the state of the engine section 40 will be described by referring mainly to Fig. 6. An idle state S1 in this Fig. 6 is a state in which the basic interface computer program 59 described above is being executed in the control processing section 51. Moreover, a ready state S2 is a state in which the engine integrated-control computer program 39₀ is being executed in the control processing section 51, and no application whatsoever is stored in the application area 47 of the storage section 42. Furthermore, an application-loaded state S3 is a state in which some application is stored in the application area 47 of the storage section 42, and neither of the applications is being executed or stopped temporarily. Moreover, an application operating state S4 is a state in which at least one application stored in the application area 47 of the storage section 42 is being executed in the control processing section 51. Furthermore, an application temporarily-stopped state S5 is a state in which at least one application is stopped temporarily and no application whatsoever is being executed in the control processing section 51.

When the power supply of the cellular phone 10 is put ON, the host section 30 is initialized and a supply of the electric power for operation and a basic clock signal to the engine section 40 is started. When the supply of the electric power for operation and the basic clock signal is started, in the engine section 40, the control processing section 51 performs an initialization operation. As shown in Fig. 6, the engine section 40 assumes the idle state S1, and the basic interface computer program 59 described above is executed in the control processing section 51. Note that, in the engine section 40, even when a reset command signal RST from the host section 30 is also detected to have been issued, the control processing section 51 performs the initialization operation.

As the host section 30 is initialized, the host section 30 lets the signal level of the host-output control signal HCT to be the significant level. Moreover, as the engine section 40 is initialized, in the engine section 40, the signal level of the engine-output control signal ECT is let to be the insignificant level. As a result of this, in the idle state S1, the engine section 40 assumes a state of a host mode in which the liquid crystal display device section 25ML and the speaker 26M are controlled by the host section 30.

Thus, when an initial loading process from a loading up to a start of execution of the engine integrated-control computer program 39₀ is performed after the engine section 40 is initialized, the engine section 40 assumes the ready state S2. In this initial loading process, an initial computer program load command with the engine integrated-control computer program 39₀ as adjunct data, and an execution-start command of an engine integrated-control computer program without the adjunct data are issued from the host section 30 to the engine section 40.

As the initial loading process is completed, the host section 30 lets the signal level of the host-output control signal HCT to be the insignificant level. On the other hand, in the engine section 40, even when the ready state S2 is assumed, the signal level of the engine-output control signal ECT is maintained to be the insignificant level. As a result of this, the engine section 40 assumes the host-mode state even in the ready state S2, similarly as in the idle state S1.

Half way in the initial loading process, when an execution of a process having a priority over the initial loading process, like receiving a call, and a specific command by an operation of the operating section 21 by the user, is sought to be performed by the host section 30, the host section 30 discontinues the initial loading process, and issues the reset command signal to RST the engine section 40. As a result of this, the engine section 40 is initialized.

In the ready state S2, an application loading process which includes a process of issuing an application command by the host section 30 with an engine application 39ⱼ as the adjunct data, is performed, and as the engine application 39ⱼ is loaded in the application area 47 of the storage section 42, the engine section 40 assumes the application-loaded state S3. Even in the application-loaded state S3, in the engine section 40, the signal level of the engine-output control signal ECT is let to be the insignificant level. As a result of this, even in the application-loaded state S3, the engine section 40 assumes the host-mode state, similarly as in the idle state S1 and the ready state S2.

Note that the loading process of the engine application 39ⱼ is performed in the application-loaded state S3, the application-loaded state S3 is maintained as the state of the engine section 40. Moreover, when the loading process of the engine application 39ⱼ is performed in the application temporarily-stopped state S5, the application temporarily-stopped state S5 is maintained as the state of the engine section 40.

The engine application 39ⱼ loaded in the application area 47 of the storage section 42 is unloaded from the application area 47 by an application unloading process which includes a process of issuing an application unload command by the host section 30, having an identifier of the engine application 39ⱼ as the adjunct data. The unloading process of the engine application 39ⱼ is performed in the application-loaded state S3, and when no application whatsoever is stored in the application area 47 of the storage section 42, the state of the engine section 40 undergoes a transition from the application-loaded state S3 to the ready state S2. Whereas, after the unloading process of the engine application 39ⱼ in the application-loaded state S3 is performed, when some application is still stored in the application area 47 of the storage section 42, the application-loaded state S3 is maintained as the state of the engine section 40. Moreover, when the loading process of the engine application 39ⱼ is performed in the application temporarily-stopped state S5, the application temporarily-stopped state S5 is maintained as the state of the engine section 40. In the application temporarily-stopped state S5, the application which is temporarily stopped cannot be unloaded.

The engine application 39ⱼ loaded in the application area 47 of the storage section 42 is started to be executed under a management by the engine integrated-control computer program 39₀, by an application-execution start process which includes a process of issuing an application execution start command by the host section 30, having the identifier of the engine application 39ⱼ as the adjunct data. The execution start process of the engine application 39ⱼ is performed when the state of the engine section 40 is the application-loaded state S3, and when the execution of the engine application 39ⱼ is started, the state of the engine section 40 undergoes a transition from the application-loaded state S3 to the application operating state S4. Moreover, when the execution start process of the engine application 39ⱼ is performed in the application temporarily-stopped state S5, the state of the engine section 40 undergoes a transition from the application temporarily-stopped state S5 to the application operating state S4. On the other hand, when the execution start process of the engine application 39ⱼ is performed in the application operating state S4 in which other application is already being executed in the engine section 40, the engine section 40 has already assumed the application operating state S4. Therefore, even when the execution of the engine application 39ⱼ is started, the engine section 40 does not undergo a transition of state.

Note that in the application operating state S4, in the engine section 40, the signal level of the engine-output control signal ECT is let to be the significant level. As a result of this, in the application operating state S4, the mode assumed is not the host mode in which the host section 30 controls the liquid crystal display device section 25ML and the speaker 26M, as in the state S1 to state S3 as described above, but is an engine mode in which the engine section 40 controls the liquid crystal display device section 25ML and the speaker 26M.

The engine application 39ⱼ which is being executed is stopped by an application stop process which includes a process of issuing an application stop command by the host section 30, having the identifier of the engine application 39ⱼ as the adjunct data. By this stop process, there is not left an application which is being executed in the engine section 40, and when there does not exist an application which is stopped temporarily, the state of the engine section 40 undergoes a transition from the application operating state S4 to the application-loaded state S3. As a result of this, the mode is changed from the engine mode to the host mode. Moreover, although the engine section 40 is in the application operating state S4, when the other application is temporarily stopped, as a result of performing the stop process of the engine application 39ⱼ, when there does not exist an application which is being executed in the engine section 40, the state of the engine section 40 undergoes a transition from the application operating state S4 to the application temporarily-stopped state S5. On the other hand, even when the execution of the engine application 39ⱼ is stopped, when other application is being executed in the engine section 40, the engine section 40 does not undergo a transition of state, even when the execution of the engine application 39ⱼ is stopped.

Moreover, the temporarily stopped engine application 39ⱼ is also stopped by the application stop process which includes a process of issuing an application stop command by the host section 30, having the identifier of the engine application 39ⱼ as the adjunct data. This application stop process is performed in the application temporarily-stopped state S5, and when there does not exist an application which is temporarily stopped, the state of the engine section 40 undergoes a transition from the application temporarily-stopped state S5 to the application-loaded state S3. On the other hand, even when the engine application 39ⱼ is stopped by the stop process of the temporarily stopped engine application 39ⱼ in the application temporarily-stopped state S5, when there exist other applications which are temporarily stopped, the engine section 40 does not undergo a transition of state.

The application 39ⱼ which is being executed is stopped temporarily by an application temporarily stop process which includes a process of issuing an application temporarily stop command by the host section 30, having the identifier of the engine application 39ⱼ as the adjunct data. By this temporarily stop process, as the execution of the engine application 39ⱼ is stopped temporarily, and there does not exist an application which is being operated, the state of the engine section 40 undergoes a transition from the application operating state S4 to the application temporarily-stopped state S5. On the other hand, even after the execution of the engine application 39ⱼ is stopped temporarily by the temporarily stop process of the engine application 39ⱼ, when there exists an application in operation, the state of the engine section 40 is not changed.

Note that in the application temporarily-stopped state S5, in the engine section 40, the signal level of the engine-output control signal ECT is let to be the insignificant level. As a result of this, in the application temporarily-stopped state S5, the host mode is assumed similarly as in the state S1 to the state S3 described above.

The temporarily stopped engine application 39ⱼ is restarted by an application restart process which includes a process of issuing an application restart command by the host section 30, having the identifier of the engine application 39ⱼ as the adjunct data. When this application restart process is performed in the application temporarily-stopped state S5, the state of the engine section 40 undergoes a transition from the application temporarily-stopped state S5 to the application operating state S4. As a result of this, the mode is changed from the host mode to the engine mode. On the other hand, when the execution of the engine application 39ⱼ is restarted by the restart process of the engine application 39ⱼ in the application operating state S4, the state of the engine section 40 does not change.

Thus, the host section 30 and the engine section 40 operate in coordination while managing the operation of the engine section 40 by the host section 30. Further, in the engine section 40, the engine application is executed appropriately under the control of the engine integrated-control computer program 39₀.

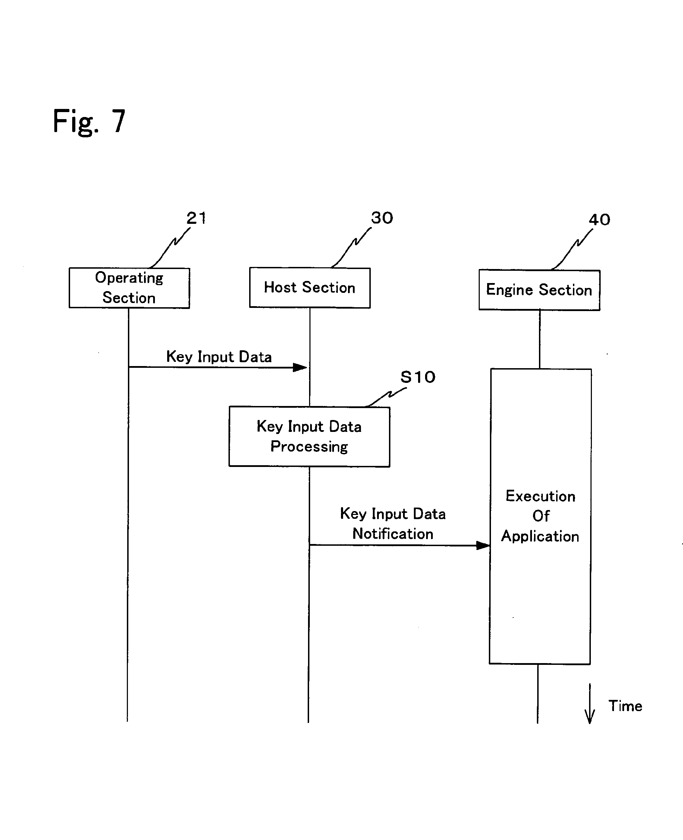

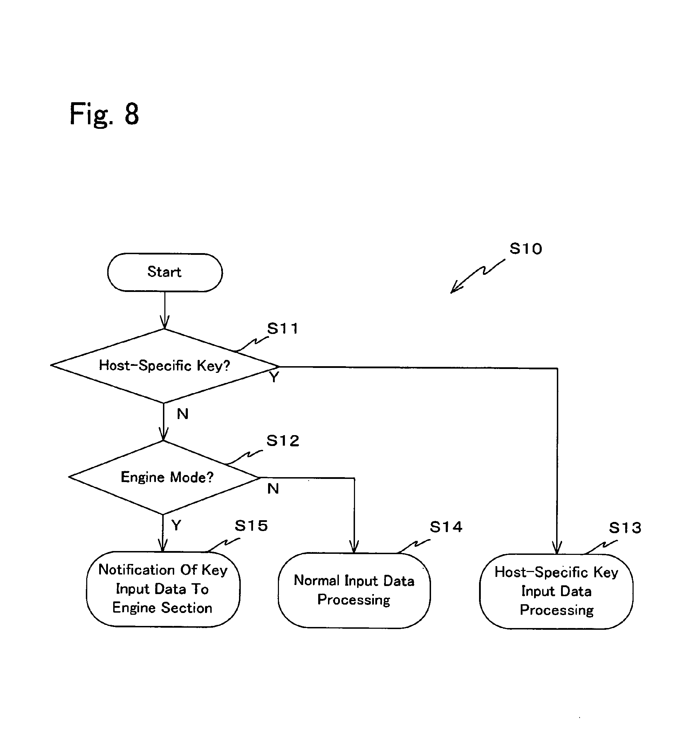

Next, a coordination process between a host section 30 and an engine section 40 associated with key input data which is input from the operating section 21 will be described while referring to Fig. 7 and Fig. 8. In this case, Fig. 7 is a sequence diagram in which a procedure of the coordination process is shown.

As shown in Fig. 7, when the key input data is notified from the operating section 21 by a key operation by the user, at step S10, the host section 30 performs key input data processing. In this key input data processing, as shown in Fig. 8, first of all, at step S11, the host section 30 makes a judgment of whether or not key input data which is received is key input data associated with a host-specific key (hereinafter called as "host-specific key input data") such as a call-ending key. When a judgment result is affirmative, the process is advanced to step S13.

At step S13, the host section 30 performs a process corresponding to the host-specific key input data which is received. For example, when the host-specific key input data is input by normal pressing of the call-ending key, and when the cellular phone 10 is in a host-mode operation, while in conversation, a call-ending process is performed, and while in operation other than a normal operation, that operation is discontinued, and a process of shifting to a standby screen display state is performed. Moreover, when the host-specific key input data is input by normal pressing of the call-ending key, and when the cellular phone 10 is in an engine-mode operation, the operation temporarily stop command which is mentioned above is issued.

When the judgment result at step S11 is negative, the process is advanced to step S12. At step S12, the host section 30 makes a judgment of whether or not an attempt is not made to stop temporarily the execution of application of the engine section 40, when the state of the engine section 40 is the application operating state S4, in other words, the engine mode, and due to an occurrence of a need to perform a process associated with an occurrence of an event having a high priority than a process being executed, such as receiving a call. When a result of this judgment is negative, the process is advanced to step S 14.

At step S14, the host section 30 performs a process unique to the host section, corresponding to key input data other than the host-specific key input data (hereinafter, called as "normal key input data") which is received. For example, when the normal key input data which is received is key input data for specifying a telephone number of an addressee to whom a call is made by the user, the host section 30 identifies the normal key input data which is received, to be significant key input data, performs a process according to a result of this identification (process such as a display process of telephone number specifying input result to the main display section 25M).

When the judgment result at step S12 is negative, the process is advanced to step S 15. At step S 15, the host section 30 performs a process of notifying the key input data which is received, to the engine section 40. The process of notifying the key input data is performed as follows.

As shown in Fig. 7, first of all, the host section 30 sends a key input data notification having the key input data as the adjunct data, to the engine section 40. At the time of sending the key input data notification to the engine section 40, the host section 30, while allowing the key input data notification having the key input data as the adjunct data to be reflected as transmission data in the interface data signal IDT, issues the interface write signal in an interface control signal ICT, and sends them one after another to the engine section 40.

In the engine section 40 which has received the key input data notification having the key input data as the adjunct data, the data is stored in two-port RAM of the host interface section 52. Further, the host interface section 52 notifies to the engine integrated-control computer program 39₀ being executed in the control processing section 51 by the internal interrupt signal in the internal control signal CNT, that the data has been received from the host section 30.

The engine integrated-control computer program 39₀ which has received the notification, first of all, reads from the two-port RAM of the host interface section 52, a header portion for which a command type and a response type in data received from the host section 30 is specified, upon issuing an internal read signal in the internal control signal CNT. Next, the engine integrated-control computer program 39₀ analyzes a content of the header portion which is read, and identifies the content of the header portion to be the key input data notification.

Next, the engine integrated-control computer program 39₀ reads from the two-port RAM of the host interface section 52, the key input data sent from the host section 30 as the adjunct data of the key input data notification upon issuing the internal read signal in the internal control signal CNT. Thus, when reading of the key input data is over, the engine integrated-control computer program 39₀, notifies the key input data which is read, to the application which is being executed. The application which has received this key input data performs a process corresponding to this key input data.

Note that a plurality of applications are being executed in the control processing section 51 at a point of time at which the key input data is read, the engine integrated-control computer program 39₀ notifies the key input data which is read, to an application which is being executed in a foreground.

Thus, by performing for each key-input, the processing of the key input data from the operating section 21 by coordination between the host section 30 and the engine section 40, a process appropriate for the key input data in the host section 30 is performed as well as a result of a key operation which is necessary for execution of an application in the engine section 40 is notified to the engine section 40 when deemed appropriate, and the key input data is passed to the application.

As it has been described above, in this embodiment, when the key input data is notified to the host section 30 from the operating section 21 by the key operation by the user, in the host section 30, the judgment of whether or not the key input data is input by the operation of the host-specific key is made. When the result of the judgment is affirmative, in the host section 30, a judgment of whether or not the engine processor 41 of the engine section 40 is in the engine-mode of controlling actively an operation of at least one engine connecting device (liquid crystal display device section 25ML and the speaker 26M), and the engine mode is estimated to be continued. Moreover, when a result of this judgment is affirmative, the key input data is notified from the host section 30 to the engine section 40. Thus, the input key data from the operating section 21 connected to the host section 30 by the key operation by the user is notified appropriately to the engine section 40 which is in the process of the executing the application.

Consequently, according to the present invention, in a structure which includes the host section 30 having the host processor 31, which performs a processing associated with a communication with an outside, and the engine section 40 having the engine processor 41, which executes a predetermined function under a management of the host section 30, it is possible to build compactly the entire mobile communication terminal, and to perform the key input data processing which is highly convenient for the user.

Moreover, since the entire key input data excluding the host-specific key input data which cannot be dealt with in the engine section 40 is notified to the engine section 40 from the host section 30, it is possible to maximize the key input data which can be used in the application executed in the engine section 40, and to execute various applications in the engine section 40.

Moreover, for the key input data associated with the operation of the host-specific key, the host section 30 performs a processing corresponding to the key input data. Therefore, it is possible to process appropriately the key input data by the operation of the host-specific key, by the user.

Furthermore, when it is not appropriate to notify the key input data to the engine section 40, for the normal key input data by the key operation other than the host specific key, the host section 30 performs uniquely a process corresponding to the key input data. Therefore, even when the normal key input data is not to be notified to the engine section 40, it is possible to process appropriately the normal key input data.

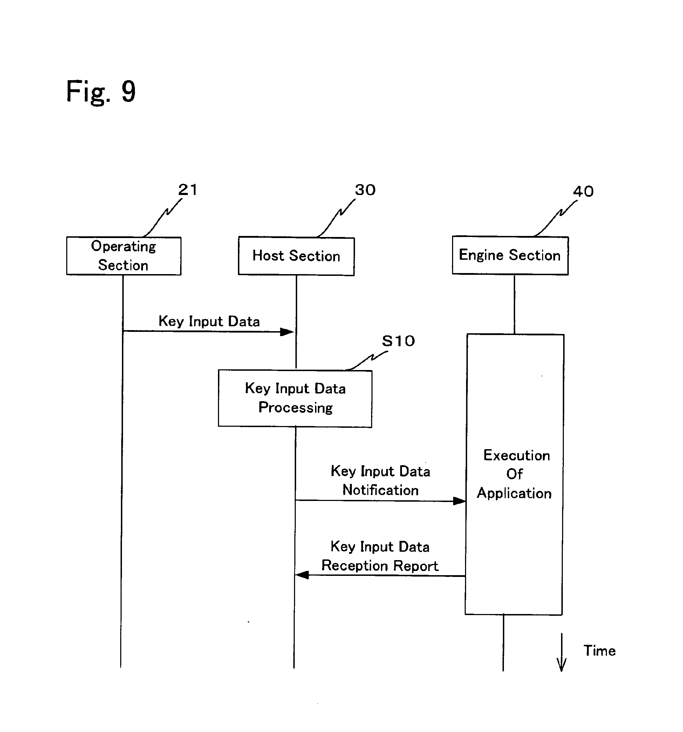

In the embodiment described above, the engine section 40 (more particularly, the engine integrated-control computer program 39₀) is not let to send back a response to the key input data notification from the host section 30. However, as shown in Fig. 9, it is also possible to let the engine section 40 to send back the response to the key input data notification from the host section 30. In this case, at a point of time at which the reading of the key input data by the engine integrated-control computer program 39₀ in the embodiment is completed, the engine integrated-control computer program 39₀ writes a key input data reception report in the two-port RAM of the host interface section 52, upon issuing the internal write signal ICT data upon allowing data indicating that the key input data has been received to be reflected in internal data signal DT as data transmitted to the host section 30. After the writing, the engine integrated-control computer program 39₀ passes the key input data which is notified from the host section 30, to the application.

On the other hand, when the data indicating that the key input data has been received is written in the two-port RAM, the host interface section 52 notifies to the host section 30 by an interface interrupt signal in the interface control signal ICT, that there is data to be notified by the engine section 40. The host section 30 which has received the notification, first of all, reads a header portion in data from the engine section 40, in the two-port RAM of the host interface section 52, upon issuing the interface read signal in the interface control signal CNT. Next, the host section 30 analyzes a content of the header portion which is read, and identifies the content of the header portion to be a key input data reception report. Thus, the processing of the key input data from the operating section 21 is terminated.

In this case, when an error response, and not the key input data reception report is sent back to the host section 30, or when the host section 30 has detected a time out error without the response from the engine section 40 for the key input data notification from the host section 30 being sent back, the host section 30 can transmit the notification once again to the engine section 40. Moreover, it is also possible to let notify the user by displaying on the main display section 25M that the response from the engine section 40 for the notification was the error response, or that there is no response from the engine section 40.

Furthermore, the host processor 31 can be let to be one processor, or let to have a two-processor structure which includes a processor for communication and a processor for application integration, and the control of the engine section 40 in the embodiment can be let to be performed by the processor for application integration.

Moreover, in the embodiment, the display-output selecting section 53 and the audio-output selecting section 54 are let to be built-in in the engine processor 41. However, it is possible to dispose at least one of the display-output selecting section 53 and the audio-output selecting section 54 outside the engine processor 41.

Furthermore, in the embodiment, the host interface section 52 is let to include the two-port RAM. However, the host interface section 52 can be let to have any structure provided that the structure can handle interfacing with the host section 30.

Moreover, in the embodiment, in the application operating state S4, the application loading process and the application unloading process are not let to be performed. However, the application loading process and the application unloading process can be let to be performed in the application operating state S4.

Furthermore, in the embodiment, the application temporarily-stop process is not let to be retried. However, the application temporarily-stop process can also be let to be retried.

In the embodiment, the cellular phone is let to be of a clamshell type. However, the present invention is also applicable to a cellular phone of a straight type, a revolving type, and a sliding type.

Moreover, in the embodiment, the present invention is applied to the cellular phone. However, it is needless to mention that the present invention can be applied to other mobile communication terminals.

### Industrial Applicability

As it has been described above, a coordination method of the present invention is applicable to a coordination operation between a host section which includes a host processor, and performs processing associated with a communication with an outside, and an engine section which includes an engine processor, and executes a predetermined function under a management of the host section.

Moreover, the present invention is also applicable to a mobile communication terminal which includes the host section which performs a processing associated with the communication with the outside, and the engine section which executes the predetermined function under the management of the host section.

## Claims

1. A coordination method which is a method of operating by coordination of a host section which performs a processing associated with a communication with an outside, and an engine section which executes a predetermined function under a management of the host section, in a mobile communication terminal, comprising steps of:
judging operation key at which the host section makes a judgment of whether or not key input data from a key operating section which is connected to a host processor of the host section is input by a key other than a predetermined key in the key operating section;
judging operation mode at which, when a judgment result at the step of judging operation key is affirmative, the host section makes a judgment of whether or not an engine processor of the engine section is in an engine-mode state of controlling actively an operation of at least one engine connecting device which is connected to the engine processor of the engine section, and the engine-mode state is estimated to be continued; and
notifying key input data at which, when a judgment result at the step of judging operation mode is affirmative, the host section notifies the key input data to the engine section.

2. The coordination method according to claim 1, wherein
the predetermined key is a key for inputting key input data which is processed only by the host section.

3. The coordination method according to claim 1, further comprising a step of:
processing predetermined key input data at which, when the judgment result at the step of judging operation key is negative, the host section performs a processing corresponding to the key input data

4. The coordination method according to claim 1, further comprising a step of:
processing normal key input data at which, when the judgment result at the step of judging operation mode is negative, the host section performs uniquely, a process corresponding to the key input data.

5. A mobile communication terminal comprising:
a host section which comprises a host processor, and performs a processing associated with a communication with an outside;
a key operating section which is connected to the host processor, and comprises a plurality of keys for input; and
an engine section which comprises an engine processor, and performs a predetermined function operation under a management of the host section, wherein
the host section comprises,
a key operating section which is connected to the host processor, and comprises a plurality of keys for input,
an operation key judging means which makes a judgment of whether or not key input data from the key operating section is input by an operation of a key other than a predetermined key in the key operating section,
an operation mode judging means which, when a judgment result by the operation key judging means is affirmative, makes a judgment of whether or not an engine processor of the engine section is in an engine-mode state of controlling actively an operation of at least one engine connecting device which is connected to the engine processor of the engine section, and the engine-mode state is estimated to be continued, and
a key input data notifying means which when a judgment result by the operation mode judging means is affirmative, notifies the key input data to the engine section, and
the engine section comprises,
at least one engine connecting device which is connected to the engine processor, and
a key input data receiving means which receives key input data which is notified from the host section.

6. The mobile communication terminal according to claim 5, wherein
the host section further comprises a predetermined key input data processing means which when the judgment result by the operation key judging means is negative, performs a processing corresponding to the key input data.

7. The mobile communication terminal according to claim 5, wherein
the host section further comprises a wireless communication section which is connected to the host processor, and performs a wireless communication between a mobile communication network and a base station.
